# EUROPEAN PATENT APPLICATION

(11) **EP 4 489 109 A1**
(43) Date of publication of application: **08.01.2025**
(21) Application number: 22929247.9
(22) Date of filing: 01.03.2022
(51) Int. Cl.: H01M 4/134, H01M 4/1395

(54) **ELECTROCHEMICAL DEVICE, AND ELECTRONIC DEVICE COMPRISING SAME**

(71) Applicant: Ningde Amperex Technology Limited, Ningde, Fujian 352100 (CN)
(72) Inventor: CHEN, Jia, Ningde, Fujian 352100 (CN)
(74) Representative: Icosa
(86) International application number: PCT/CN2022/078573
(87) International publication number: WO 2023/164794

(57) **Abstract**

This application provides an electrochemical device and an electronic device containing the electrochemical device. A negative electrode plate of the electrochemical device contains no negative active material, but a ceramic coating layer is applied onto two surfaces of the negative current collector in a thickness direction of the negative current collector. The ceramic coating layer facilitates Li⁺ to deposit evenly on the negative current collector to form a lithium metal layer during charging of the electrochemical device. Therefore, the lithium metal layer is formed between the negative current collector and the ceramic coating layer, and the lithium metal layer is uniform and dense, and the ceramic coating layer can also absorb lithium dendrites. In this way, the thickness space that is originally reserved for disposing the negative active material is vacated. In the vacated thickness space, an inexpensive positive active material can be added onto the positive electrode plate to increase the energy density of the electrochemical device. Moreover, the ceramic coating layer is more cost-efficient than the negative active material layer. By this means, the production cost of the electrochemical device is reduced effectively.

## Description

### TECHNICAL FIELD

This application relates to the field of electrochemical technology, and in particular, to an electrochemical device and an electronic device containing same.

### BACKGROUND

As a new type of mobile energy storage device, secondary batteries (such as a lithium-ion battery) are increasingly required in large quantities in the field of portable small electronic devices such as a mobile phone, a laptop computer, and a video camera and in the fields of large electric transport vehicles and renewable energy storage equipment by virtue of a high energy density, a high open-circuit voltage, a low self-discharge rate, a long cycle life, high safety, and other advantages. However, electronic products such as a disposable electronic cigarette device that just needs to be cycled for a small number of charge-discharge cycles, the requirement for the cycle life of the secondary battery is relatively low. Therefore, how to gain market competitiveness by reducing the production cost of such secondary batteries has become a pressing technical challenge to a person skilled in the art.

### SUMMARY

This application provides an electrochemical device and an electronic device containing the electrochemical device to reduce the production cost of the electrochemical device.

It is hereby noted that in the subject-matter hereof, this application is construed by using a lithium-ion battery as an example of an electrochemical device, but the electrochemical device according to this application is not limited to the lithium-ion battery.

A first aspect of this application provides an electrochemical device. The electrochemical device includes a positive electrode plate and a negative electrode plate. The positive electrode plate includes a positive current collector and a positive active material layer disposed on at least one surface of the positive current collector. The positive active material layer includes a lithium-containing positive active material. The negative electrode plate includes a negative current collector and a ceramic coating layer disposed on both surfaces of the negative current collector. The negative electrode plate further includes a lithium metal layer formed by depositing lithium ions from the lithium-containing positive active material onto a surface of the negative current collector during charging. The lithium metal layer is located between the negative current collector and the ceramic coating layer. The negative electrode plate contains no negative active material.

Through extensive research, the applicant hereof finds that, by disposing no negative active material on the negative electrode plate but applying a ceramic coating layer onto both surfaces of the negative current collector in a thickness direction thereof, the ceramic coating layer facilitates lithium ions (Li⁺) to deposit uniformly on the negative current collector to form a lithium metal layer during charging of the electrochemical device. Therefore, the lithium metal layer is formed between the negative current collector and the ceramic coating layer. The lithium metal layer is uniform and dense, and the ceramic coating layer can also absorb lithium dendrites. In this way, the thickness space that is originally reserved for disposing the negative active material is vacated. In the vacated thickness space, an inexpensive positive active material can be added onto the positive electrode plate to increase the energy density of the electrochemical device. Moreover, the ceramic coating layer is more cost-efficient than the negative active material layer. By this means, the material cost of the electrochemical device is lower on the premise that the energy density and cycle performance are sufficient, thereby reducing the production cost of the electrochemical device effectively.

In some embodiments of this application, the electrochemical device further includes an electrolyte solution. The electrolyte solution includes fluoroethylene carbonate and lithium difluoro(oxalato)borate. Based on a mass of the electrolyte solution, a mass percent W₁ of the fluoroethylene carbonate is 0.1 % to 10%, and a mass percent W₂ of the lithium difluoro(oxalato)borate is 0.05% to 5%. The electrolyte solution in the electrochemical device includes fluoroethylene carbonate and lithium difluoro(oxalato)borate, and the mass percent of the fluoroethylene carbonate and the mass percent of the lithium difluoro(oxalato)borate are controlled to fall within the above range, thereby forming a higher-quality solid electrolyte interface (SEI) film on the surface of the negative electrode plate. Li⁺ ions are facilitated to deposit uniformly on the negative current collector to form a dense and homogeneous lithium metal layer, thereby implementing reversibility and stability of electroplating of the lithium metal layer to achieve sufficient cycle performance of the electrochemical device. By this means, the material cost of the electrochemical device is lower on the premise that the energy density and cycle performance are sufficient, thereby reducing the production cost of the electrochemical device effectively.

In some embodiments, the lithium-containing positive active material includes at least one of lithium cobalt oxide, lithium manganese oxide, lithium nickel cobalt manganese oxide, lithium titanium oxide, or lithium fluoride. The above type of lithium-containing positive active material reduces the material cost of the electrochemical device on the premise that the energy density and cycle performance are sufficient, thereby reducing the production cost of the electrochemical device effectively.

In some embodiments of this application, the positive active material layer further includes a positive electrode supplement. The positive lithium supplement includes at least one of Li₂O or LiₓMO_{y}, where 2 ≤ x ≤ 6, 2 ≤ y < 4, and M includes at least one of Al, Ni, Co, Mg, Mn, Cu, Fe, or Ti. Based on a mass of the positive active material layer, a mass percent W₃ of the positive electrode supplement is 3% to 10%. By selecting the above type of positive electrode supplement and controlling the mass percent W₃ of the positive electrode supplement in the positive active material layer to fall within the above range, this application enables Li₂O to release more Li⁺ ions at a relatively low potential, so as to provide an additional lithium source. Therefore, during long-term cycling of the electrochemical device, the lithium source can counteract irreversible loss of lithium in the electrochemical device that originally contains no negative active material, thereby implementing the reversibility and stability of the electroplating of the lithium metal layer, and in turn, improving the cycle performance of the electrochemical device. This can further improve the cycle performance of the electrochemical device while reducing the production cost.

In some embodiments of this application, the positive active material layer further includes a positive electrode additive. The positive electrode additive includes a composite material formed of an inorganic lithium salt and a first conductive agent. A mass ratio between the inorganic lithium salt and the first conductive agent is 1: 3 to 1: 7. Based on a mass of the positive active material layer, a mass percent W₄ of the positive electrode additive is 4% to 8%. By selecting the positive electrode additive and controlling the mass percent W₄ of the positive electrode additive to fall within the above range, more Li⁺ ions can be released to provide an additional lithium source during charge-discharge cycling of the electrochemical device, thereby increasing the first-cycle discharge capacity of the electrochemical device, reducing the charge transfer resistance of the electrochemical device, and improving the energy density, cycle performance, and C-rate performance of the electrochemical device. Therefore, during long-term cycling of the electrochemical device, the lithium source can counteract irreversible loss of lithium in the electrochemical device that originally contains no negative electrode, thereby implementing the reversibility and stability of the electroplating of the lithium metal layer, and in turn, improving the cycle performance of the electrochemical device. This can further improve the energy density, cycle performance, and C-rate performance of the electrochemical device while reducing the production cost.

In some embodiments of this application, the inorganic lithium salt includes LiₛQₐN_{b}Oₜ, where 2 ≤ s ≤ 8, 0 ≤ a ≤ 1, 0 ≤ b ≤ 1, a + b ≥ 1, 2 ≤ t ≤ 6, Q is any one selected from Fe, Co, Mn, Ni, Zr, V, Nb, or Mo, and N is any one selected from Al, Mg, Ti, Cr, Y, Sr, Si, W, Ga, or Zn. The first conductive agent includes at least one of graphene, acetylene black, single-walled carbon nanotubes, or multi-walled carbon nanotubes. The above inorganic lithium salt and the first conductive agent further improve the cycle performance of the electrochemical device while reducing the production cost.

In some embodiments of this application, the positive electrode plate further includes a ceramic coating layer. The ceramic coating layer is disposed on a surface of the positive active material layer. The ceramic coating layer disposed on the surface of the positive active material layer is more conducive to obstructing the lithium dendrites precipitated by the negative electrode plate from being inserted into the positive electrode plate, thereby improving the safety performance and thermal stability of the electrochemical device.

In some embodiments of this application, the ceramic coating layer includes an inorganic powder and a first binder. Based on a mass of the ceramic coating layer, a mass percent W₅ of the inorganic powder is 85% to 95%, and a mass percent W₆ of the first binder is 5% to 15%. The effect of the ceramic coating is more favorably exerted by using the above materials to form a ceramic coating layer and controlling the mass percentages of the inorganic powder and the first binder in the ceramic coating layer to fall within the above ranges. By this means, the material cost of the electrochemical device is lower on the premise that the energy density and cycle performance are sufficient, thereby reducing the production cost of the electrochemical device effectively.

In some embodiments of this application, the inorganic powder includes at least one of aluminum oxide, magnesium oxide, zirconium oxide, or boehmite. The first binder includes at least one of polyacrylic acid, polyvinylidene fluoride, polyimide, or polyvinyl alcohol. The above materials are more favorable for the formation and functioning of the ceramic coating layer. By this means, the material cost of the electrochemical device is lower on the premise that the energy density and cycle performance are sufficient, thereby reducing the production cost of the electrochemical device effectively. In some embodiments of this application, a coating weight of the ceramic coating layer is 5 mg/5000 mm² to 20 mg/5000 mm². Controlling the coating weight of the ceramic coating layer to fall within the above range is more conducive to improving the C-rate performance and cycle performance of the electrochemical device, thereby further improving the C-rate performance and cycle performance of the electrochemical device while reducing the production cost.

In some embodiments of this application, a thickness of the ceramic coating layer is 1 µm to 3 µm. The effect of the ceramic coating layer in this application is more effectively exerted by controlling the thickness of the ceramic coating layer to fall within the above range. By this means, the material production cost of the electrochemical device is lower on the premise that the energy density and cycle performance are sufficient, thereby reducing the production cost of the electrochemical device effectively.

In some embodiments of this application, the negative electrode plate further includes a conductive layer. The conductive layer is disposed between the negative current collector and the ceramic coating layer. The lithium metal layer is disposed between the negative current collector and the conductive layer. The conductive layer can receive Li⁺ ions deintercalated from the positive electrode plate, suppress lithium plating and the formation of dead lithium, and in turn, improve the safety and cycle performance of the electrochemical device.

In some embodiments of this application, the conductive layer includes a second conductive agent and a second binder. Based on a mass of the conductive layer, a mass percent W₇ of the second conductive agent is 60% to 70%, and a mass percent W₈ of the second binder is 30% to 40%.

In some embodiments of this application, the second conductive agent includes at least one of amorphous carbon, single-walled carbon nanotubes, or multi-walled carbon nanotubes. The second binder includes at least one of styrene-butadiene rubber, carboxymethyl cellulose, or polyvinyl alcohol.

The effect of the conductive layer is more favorably exerted by using the above materials to form a conductive layer and controlling the mass percentages of the second conductive agent and the second binder to fall within the above ranges. In this way, the conductive layer can receive Li⁺ ions deintercalated from the positive electrode plate, suppress lithium plating and the formation of dead lithium, and in turn, improve the safety and cycle performance of the electrochemical device.

A second aspect of this application provides an electronic device. The electronic device includes the electrochemical device according to any one of the above embodiments.

Some of the beneficial effects of this application are as follows:

In an embodiment of this application, by disposing no negative active material on the negative electrode plate but applying a ceramic coating layer onto both surfaces of the negative current collector in the thickness direction thereof, the ceramic coating layer facilitates Li⁺ ions to deposit uniformly on the negative current collector to form a lithium metal layer during charging of the electrochemical device. Therefore, the lithium metal layer is formed between the negative current collector and the ceramic coating layer. The lithium metal layer is uniform and dense, and the ceramic coating layer can also absorb lithium dendrites. In this way, the thickness space that is originally reserved for disposing the negative active material is vacated. In the vacated thickness space, an inexpensive positive active material can be added onto the positive electrode plate to increase the energy density of the electrochemical device. Moreover, the ceramic coating layer is more cost-efficient than the negative active material layer. By this means, the material cost of the electrochemical device is lower on the premise that the energy density and cycle performance are sufficient, thereby reducing the production cost of the electrochemical device effectively.

### BRIEF DESCRIPTION OF DRAWINGS

To describe the technical solutions in some embodiments of this application more clearly, the following outlines the drawings to be used in the description of the embodiments. Evidently, the drawings outlined below merely illustrate some embodiments of this application, and a person of ordinary skill in the art may derive other drawings based on the listed drawings.
FIG. 1 is a cross-sectional schematic view of an electrochemical device according to some embodiments of this application;
FIG. 2 is a cross-sectional schematic view of a positive electrode plate according to some embodiments of this application; and
FIG. 3 is a cross-sectional schematic view of a negative electrode plate according to some embodiments of this application.

List of reference numerals:
10 positive electrode plate; 11 positive current collector; 12 positive active material layer; 20 negative electrode plate; 21 negative current collector; 22 lithium metal layer; 23 conductive layer; 40 ceramic coating layer; 30 separator; 100 electrochemical device

### DETAILED DESCRIPTION OF EMBODIMENTS

To make the objectives, technical solutions, and advantages of this application clearer, the following describes this application in more detail with reference to drawings and embodiments. Evidently, the described embodiments are merely a part of but not all of the embodiments of this application. All other embodiments derived by a person of ordinary skill in the art based on the embodiments of this application fall within the protection scope of this application.

It is hereby noted that in specific embodiments of this application, this application is construed by using a lithium-ion battery as an example of the electrochemical device, but the electrochemical device according to this application is not limited to the lithium-ion battery.

A first aspect of this application provides an electrochemical device. The electrochemical device includes a positive electrode plate and a negative electrode plate. The positive electrode plate includes a positive current collector and a positive active material layer disposed on at least one surface of the positive current collector. The positive active material layer includes a lithium-containing positive active material. The negative electrode plate includes a negative current collector and a ceramic coating layer disposed on both surfaces of the negative current collector. The negative electrode plate further includes a lithium metal layer formed by depositing lithium ions from the lithium-containing positive active material onto a surface of the negative current collector during charging. The lithium metal layer is located between the negative current collector and the ceramic coating layer. The negative electrode plate contains no negative active material.

Through extensive research, the applicant hereof finds that, by disposing no negative active material on the negative electrode plate but applying a ceramic coating layer onto both surfaces of the negative current collector in a thickness direction thereof, the ceramic coating layer facilitates Li⁺ ions to deposit uniformly on the negative current collector to form a lithium metal layer during charging of the electrochemical device. Therefore, the lithium metal layer is formed between the negative current collector and the ceramic coating layer. The lithium metal layer is uniform and dense, and the ceramic coating layer can also absorb lithium dendrites. In this way, the thickness space that is originally reserved for disposing the negative active material is vacated (in the prior art, the thickness of the negative active material layer containing the negative active material is usually greater than 100 µm). In the vacated thickness space, an inexpensive positive active material can be added onto the positive electrode plate to increase the energy density of the electrochemical device. Moreover, the ceramic coating layer is more cost-efficient than the negative active material layer. By this means, the material cost of the electrochemical device is lower on the premise that the energy density and cycle performance are sufficient, thereby reducing the production cost of the electrochemical device effectively.

In this application, the positive current collector includes a first surface and a second surface opposite to each other in the thickness direction. A person skilled in the art understands that the "positive active material layer disposed on at least one surface of the positive current collector" means that the positive active material layer may be disposed on the first surface, or disposed on the second surface, or disposed on both the first surface and the second surface, depending on selection by a person skilled in the art. It is hereby noted that the "surface" above may be the entire region of the first surface and/or the second surface, or a partial region of the first surface and/or the second surface, without being particularly limited herein, as long as the objectives of the application can be achieved. Understandably, "the negative electrode plate containing no negative active material" in this application means that the negative electrode plate contains no negative active material layer.

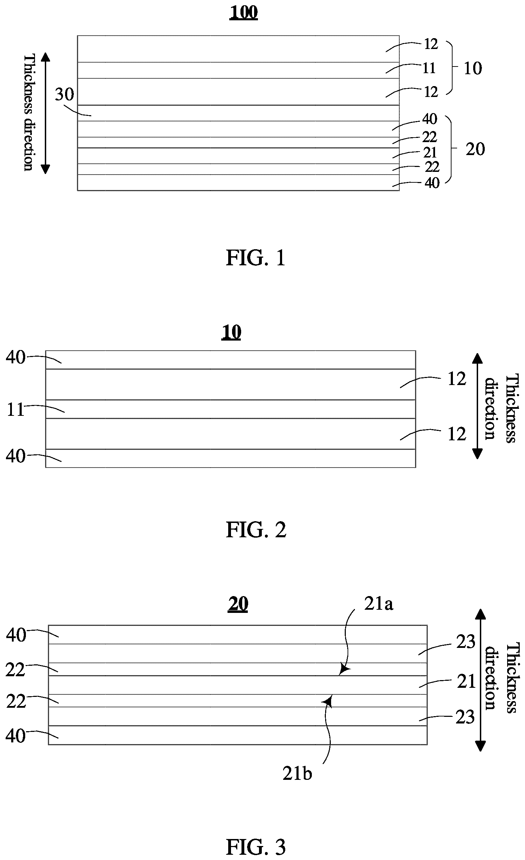

As an example, FIG. 1 shows a cross-sectional schematic view of an electrochemical device according to some embodiments of this application. As shown in FIG. 1, the electrochemical device 100 includes a positive electrode plate 10, a negative electrode plate 20, and a separator 30 disposed between the positive electrode plate 10 and the negative electrode plate 20. The separator 30 is configured to separate the positive electrode plate 10 from the negative electrode plate 20 to prevent an internal short circuit of the electrochemical device 100, and allow free passage of electrolyte ions so as to complete electrochemical charging and discharging processes. The positive electrode plate 10 includes a positive current collector 11 and positive active material layers 12 disposed on both surfaces of the positive current collector 11 in the thickness direction thereof. The positive active material layer 12 includes a lithium-containing positive active material. The Li⁺ ions in the lithium-containing positive active material are deposited on the surface of the negative current collector 21 to form a lithium metal layer 22 during charging of the electrochemical device 100. The negative electrode plate 20 includes a negative current collector 21 and ceramic coating layers 40 disposed on both surfaces of the negative current collector 21 in the thickness direction thereof, and further includes two lithium metal layers 22 located between the negative current collector 21 and the ceramic coating layer 40.

It is hereby noted that in this application, the inorganic powder used in the ceramic coating layer exists in the form of particles. Clearances exist between the particles in the ceramic coating layer. Therefore, a particle clearance is generated between the ceramic coating layer and the negative current collector. The lithium metal layer is formed discretely in the particle clearance. "The lithium metal layer is located between the negative current collector and the ceramic coating layer" may be understood to mean that a discrete lithium metal layer is located in each particle clearance in the ceramic coating layer near the negative current collector. The lithium metal layer is elemental lithium. The thickness of the lithium metal layer is greater than 0 µm and less than or equal to 100 µm.

In some embodiments of this application, the electrochemical device further includes an electrolyte solution. The electrolyte solution includes fluoroethylene carbonate (FEC) and lithium difluoro(oxalato)borate (LiDFOB). Based on a mass of the electrolyte solution, a mass percent W₁ of the fluoroethylene carbonate is 0.1% to 10%, preferably 0.1% to 6%; and a mass percent W₂ of the lithium difluoro(oxalato)borate is 0.05% to 5%, preferably 3% to 4%. For example, the mass percent W₁ of the fluoroethylene carbonate may be 0.1%, 2%, 3%, 4%, 5%, 6%, 7%, 8%, 9%, 10%, or a value falling within a range formed by any two thereof. The mass percent W₂ of the lithium difluoro(oxalato)borate may be 0.05%, 0.5%, 1%, 2%, 3%, 4%, 5%, or a value falling within a range formed by any two thereof. The electrolyte solution in the electrochemical device includes fluoroethylene carbonate and lithium difluoro(oxalato)borate, and the mass percent of the fluoroethylene carbonate and the mass percent of the lithium difluoro(oxalato)borate are controlled to fall within the above range, thereby forming a higher-quality SEI film on the surface of the negative electrode plate. Li⁺ ions are facilitated to deposit uniformly on the negative current collector to form a dense and homogeneous lithium metal layer, thereby implementing reversibility and stability of electroplating of the lithium metal layer to achieve sufficient cycle performance of the electrochemical device. By this means, the material cost of the electrochemical device is lower on the premise that the energy density and cycle performance are sufficient, thereby reducing the production cost of the electrochemical device effectively.

In some embodiments of this application, the lithium-containing positive active material includes at least one of lithium cobalt oxide (LiCoO₂), lithium manganese oxide, lithium nickel cobalt manganese oxide, lithium titanium oxide, or lithium fluoride. The above type of lithium-containing positive active material reduces the material cost of the electrochemical device on the premise that the energy density and cycle performance are sufficient, thereby reducing the production cost of the electrochemical device effectively.

In some embodiments of this application, the positive active material layer further includes a positive electrode supplement. The positive lithium supplement includes at least one of Li₂O or LiₓMO_{y}. Preferably, the positive electrode supplement includes both Li₂O and LiₓMO_{y}, where 2 ≤ x ≤ 6, 2 ≤ y ≤ 4, and M includes at least one of Al, Ni, Co, Mg, Mn, Cu, Fe, or Ti. Based on a mass of the positive active material layer, a mass percent W₃ of the positive electrode supplement is 3% to 10%. For example, the mass percent W₃ of the positive electrode supplement may be 3%, 4%, 5%, 6%, 7%, 8%, 9%, 10%, or a value falling within a range formed by any two thereof. By selecting the above type of positive electrode supplement and controlling the mass percent W₃ of the positive electrode supplement in the positive active material layer to fall within the above range, this application enables Li₂O to release more Li⁺ ions at a relatively low potential, so as to provide an additional lithium source. Therefore, during long-term cycling of the electrochemical device, the lithium source can counteract irreversible loss of lithium in the electrochemical device that originally contains no negative active material, thereby implementing the reversibility and stability of the electroplating of the lithium metal layer, and in turn, improving the cycle performance of the electrochemical device. This can further improve the cycle performance of the electrochemical device while reducing the production cost. When the positive electrode supplement includes both Li₂O and LiₓMO_{y}, the LiₓMO_{y} can further catalyze the Li₂O to release more Li⁺ ions at a relatively low potential to provide an additional lithium source, thereby further improving the cycle performance of the electrochemical device while reducing the production cost.

Further, when the positive electrode supplement includes both Li₂O and LiₓMO_{y}, the mass ratio between the Li₂O and the LiₓMO_{y} is not particularly limited herein, as long as the objectives of this application can be achieved. Preferably, the mass ratio between the Li₂O and the LiₓMO_{y} is 30: 70 to 35: 65.

In some embodiments of this application, the positive active material layer further includes a positive electrode additive. The positive electrode additive includes a composite material formed of an inorganic lithium salt and a first conductive agent. A mass ratio between the inorganic lithium salt and the first conductive agent is 1: 3 to 1: 7. Based on a mass of the positive active material layer, a mass percent W₄ of the positive electrode additive is 4% to 8%. For example, the mass ratio between the inorganic lithium salt and the first conductive agent is 1: 3, 1: 4, 1: 5, 1: 6, 1: 7, or a value falling within a range formed by any two thereof. The mass percent W₄ of the positive electrode additive may be 4%, 5%, 6%, 7%, 8%, or a value falling within a range formed by any two thereof. By selecting the positive electrode additive and controlling the mass percent W₄ of the positive electrode additive to fall within the above range, more Li⁺ ions can be released to provide an additional lithium source during charge-discharge cycling of the electrochemical device, thereby increasing the first-cycle discharge capacity of the electrochemical device, reducing the charge transfer resistance of the electrochemical device, and improving the energy density, cycle performance, and C-rate performance of the electrochemical device. Therefore, during long-term cycling of the electrochemical device, the lithium source can counteract irreversible loss of lithium in the electrochemical device that originally contains no negative electrode, thereby implementing the reversibility and stability of the electroplating of the lithium metal layer, and in turn, improving the cycle performance of the electrochemical device. This can improve the energy density, cycle performance, and C-rate performance of the electrochemical device while reducing the production cost.

In some embodiments of this application, the inorganic lithium salt includes LiₛQₐN_{b}Oₜ, where 2 ≤ s ≤ 8, 0 ≤ a ≤ 1, 0 ≤ b ≤ 1, a + b ≥ 1, 2 ≤ t ≤ 6, Q is any one selected from Fe, Co, Mn, Ni, Zr, V, Nb, or Mo, and N is any one selected from Al, Mg, Ti, Cr, Y, Sr, Si, W, Ga, or Zn. The first conductive agent includes at least one of graphene, acetylene black, single-walled carbon nanotubes, or multi-walled carbon nanotubes. The above inorganic lithium salt and the first conductive agent further improve the cycle performance of the electrochemical device while reducing the production cost.

The method for preparing the positive electrode additive is not particularly limited herein, as long as the objectives of this application can be achieved. For example, a method for preparing a positive electrode additive includes the following steps:
(1) Dissolving a lithium-containing compound, a Q-containing compound, and an N-containing component in a solvent at a molar ratio of s: a: b between Li, Q, and N. Stirring the mixture to obtain a homogeneous mixed solution, and then evaporating the solvent and drying mixture to obtain a precursor of an inorganic lithium salt, where 2 ≤ s ≤ 8, 0 ≤ a ≤ 1, 0 ≤ b ≤ 1, a + b ≥ 1, 2 ≤ t ≤ 6, Q is any one selected from Fe, Co, Mn, Ni, Zr, V, Nb, or Mo, and N is any one selected from Al, Mg, Ti, Cr, Y, Sr, Si, W, Ga, or Zn.
(2) Calcining the precursor of the inorganic lithium salt obtained in step (1) in a protective gas atmosphere, and then cooling and ball-milling the calcined product to obtain inorganic lithium salt particles, that is, LiₛQₐN_{b}Oₜ.
(3) Ultrasonically dispersing the inorganic lithium salt particles in a solution that contains the first conductive agent, evaporating the solvent and drying the mixture to obtain a composite material formed by the inorganic lithium salt and the conductive agent, that is, a positive electrode additive. The mass ratio between the inorganic lithium salt and the first conductive agent is 1: 3 to 1: 7.

In some embodiments of this application, the positive electrode plate further includes a ceramic coating layer. The ceramic coating layer is disposed on a surface of the positive active material layer. It is hereby noted that the surface of the positive active material layer means one surface that is not in contact with the positive current collector among the two surfaces of the positive active material layer in the thickness direction thereof. The ceramic coating layer disposed on the surface of the positive active material layer is more conducive to obstructing the lithium dendrites precipitated by the negative electrode plate from being inserted into the positive electrode plate, thereby improving the safety performance and thermal stability of the electrochemical device.

As an example, FIG. 2 is a schematic structural diagram of a positive electrode plate according to some embodiments of this application. As shown in FIG. 2, the positive electrode plate 10 includes a positive current collector 11, a positive active material layer 12, and a ceramic coating layer 40. The two positive active material layers 12 are disposed on the two surfaces of the positive current collector 11 in the thickness direction thereof respectively. The two ceramic coating layers 40 are disposed, independently of each other, on one surface that is not in contact with the positive current collector 11 among the two surfaces of the positive active material layer 12 in the thickness direction thereof, so that the positive active material layer 12 is located between the positive current collector 11 and the ceramic coating layer 40. The two positive active material layers 12 may be the same or different, and the two ceramic coating layers 40 may be the same or different. In some other embodiments of this application, in the positive electrode plate 10 shown in FIG. 2, the ceramic coating layer 40 may be disposed on the surface of either of the two positive active material layers 12, without being limited herein, as long as the objective of this application can be achieved.

In some embodiments of this application, the ceramic coating layer includes an inorganic powder and a first binder. Based on a mass of the ceramic coating layer, a mass percent W₅ of the inorganic powder is 85% to 95%, and a mass percent W₆ of the first binder is 5% to 15%. For example, the mass percent W₅ of the inorganic particles may be 85%, 87%, 89%, 91%, 93%, 95%, or a value falling within a range formed by any two thereof. For example, the mass percent W₆ of the first binder may be 5%, 7%, 9%, 11%, 13%, 15%, or a value falling within a range formed by any two thereof. The effect of the ceramic coating is more favorably exerted by using the above materials to form a ceramic coating layer and controlling the mass percentages of the inorganic powder and the first binder in the ceramic coating layer to fall within the above ranges. By this means, the material cost of the electrochemical device is lower on the premise that the energy density and cycle performance are sufficient, thereby reducing the production cost of the electrochemical device effectively.

In some embodiments of this application, the inorganic powder includes at least one of aluminum oxide, magnesium oxide, zirconium oxide, or boehmite. The first binder includes at least one of polyacrylic acid, polyvinylidene fluoride, polyimide, or polyvinyl alcohol. The above materials are more favorable for the formation and functioning of the ceramic coating layer. By this means, the material cost of the electrochemical device is lower on the premise that the energy density and cycle performance are sufficient, thereby reducing the production cost of the electrochemical device effectively.

In some embodiments of this application, a coating weight of the ceramic coating layer is 5 mg/5000 mm² to 20 mg/5000 mm². For example, the coating weight of the ceramic coating layer is 5 mg/5000 mm², 10 mg/5000 mm², 15 mg/5000 mm², 20 mg/5000 mm², or a value falling within a range formed by any two thereof. Controlling the coating weight of the ceramic coating layer to fall within the above range and overlaying the negative current collector with the ceramic coating layer uniformly are more conducive to improving the uniformity and stability of the electroplating of the lithium metal layer, and in turn, more conducive to improving the C-rate performance and cycle performance of the electrochemical device, thereby further improving the C-rate performance and cycle performance of the electrochemical device while reducing the production cost.

In some embodiments of this application, the thickness of the ceramic coating layer is 1 µm to 3 µm. For example, the thickness of the ceramic coating layer may be 1 µm, 1.5 µm, 2 µm, 2.5 µm, 3 µm, or a value falling within a range formed by any two thereof. If the thickness of the ceramic coating layer is overly small (for example, less than 1 µm), the mechanical strength of the ceramic coating layer is not enough to achieve the objectives of this application. If the thickness of the ceramic coating layer is overly large (for example, greater than 3 µm), the volume of the electrochemical device is increased, thereby impairing the energy density of the electrochemical device. The effect of the ceramic coating layer in this application is more effectively exerted by controlling the thickness of the ceramic coating layer to fall within the above range. By this means, the material production cost of the electrochemical device is lower on the premise that the energy density and cycle performance are sufficient, thereby reducing the production cost of the electrochemical device effectively.

In some embodiments of this application, the negative electrode plate further includes a conductive layer. The conductive layer is disposed between the negative current collector and the ceramic coating layer. The lithium metal layer is disposed between the negative current collector and the conductive layer. The conductive layer can receive Li⁺ ions deintercalated from the positive electrode plate, suppress lithium plating and the formation of dead lithium, and in turn, improve the safety and cycle performance of the electrochemical device.

As an example, FIG. 3 is a schematic structural diagram of a negative electrode plate according to some embodiments of this application. As shown in FIG. 3, the negative current collector 21 includes a first surface 21a and a second surface 21b disposed opposite to each other in the thickness direction thereof. A lithium metal layer 22, a conductive layer 23, and a ceramic coating layer 40 are disposed on the first surface 21a and the second surface 21b separately. The conductive layer 23 is disposed between the negative current collector 21 and the ceramic coating layer 40. The lithium metal layer 22 is disposed between the negative current collector 21 and the conductive layer 23. As can be seen, along a direction facing away from the first surface 21a, the lithium metal layer 22, the conductive layer 23, and the ceramic coating layer 40 are disposed sequentially on the first surface 21a. Along a direction facing away from the second surface 21b, the lithium metal layer 22, the conductive layer 23, and the ceramic coating layer 40 are disposed sequentially on the second surface 21b. Understandably, in the negative electrode plate 20 shown in FIG. 3, the two conductive layers 23 may be identical or different, and the two ceramic coating layers 40 may be identical or different.

In some embodiments of this application, the conductive layer includes a second conductive agent and a second binder. Based on a mass of the conductive layer, a mass percent W₇ of the second conductive agent is 60% to 70%, and a mass percent W₈ of the second binder is 30% to 40%. For example, the mass percent W₇ of the second conductive agent may be 60%, 62%, 64%, 66%, 68%, 70%, or a value falling within a range formed by any two thereof. For example, the mass percent W₈ of the second binder may be 30%, 32%, 34%, 36%, 38%, 40%, or a value falling within a range formed by any two thereof. The effect of the conductive layer is more favorably exerted by using the above materials to form a conductive layer and controlling the mass percentages of the second conductive agent and the second binder to fall within the above ranges. In this way, the conductive layer can receive Li⁺ ions deintercalated from the positive electrode plate, suppress lithium plating and the formation of dead lithium, and in turn, improve the safety and cycle performance of the electrochemical device.

In some embodiments of this application, the second conductive agent includes at least one of amorphous carbon, single-walled carbon nanotubes, or multi-walled carbon nanotubes. The second binder includes at least one of styrene-butadiene rubber, carboxymethyl cellulose, or polyvinyl alcohol. The above materials are more favorable for the formation and functioning of the conductive layer. In this way, the conductive layer can receive Li⁺ ions deintercalated from the positive electrode plate, suppress lithium plating and the formation of dead lithium, and in turn, improve the safety and cycle performance of the electrochemical device.

In some embodiments of this application, the thickness of the conductive layer is 0.5 µm to 3 µm. For example, the thickness of the conductive layer may be 0.5 µm, 1 µm, 1.5 µm, 2 µm, 2.5 µm, 3 µm, or a value falling within a range formed by any two thereof. If the thickness of the conductive layer is overly small (for example, less than 0.5 µm), the mechanical strength of the conductive layer is not enough to achieve the objectives of this application. If the thickness of the conductive layer is overly large (for example, greater than 3 µm), the volume of the electrochemical device is increased, thereby impairing the energy density of the electrochemical device. The effect of the conductive layer in this application is more effectively exerted by controlling the thickness of the conductive layer to fall within the above range, thereby further improving the safety and cycle performance of the electrochemical device while reducing the material cost.

The positive current collector is not particularly limited herein, as long as the objectives of this application can be achieved. For example, the positive current collector may include aluminum foil, aluminum alloy foil, a composite current collector, or the like. In this application, the thicknesses of the positive current collector and the positive active material layer are not particularly limited, as long as the objectives of this application can be achieved. For example, the thickness of the positive current collector is 5 µm to 20 µm, and preferably 6 µm to 18 µm. The thickness of the positive active material layer on a single side is 30 µm to 120 µm.

The negative current collector is not particularly limited herein, as long as the objectives of this application can be achieved. For example, the negative current collector may be copper foil, copper alloy foil, nickel foil, stainless steel foil, titanium foil, foamed nickel, foamed copper, a composite current collector, or the like. The thickness of the negative current collector is not particularly limited herein, as long as the objectives of this application can be achieved. For example, the thickness of the negative current collector is 6 µm to 10 µm.

The electrolyte solution in this application further includes a lithium salt and a nonaqueous solvent.

The lithium salt is not particularly limited herein. For example, the lithium salt is at least one selected from lithium hexafluorophosphate (LiPF₆), lithium tetrafluoroborate (LiBF₄), lithium hexafluoroarsenate (LiAsF₆), lithium perchlorate (LiClO₄), lithium tetraphenylborate (LiB(C₆H₅)₄), lithium methanesulfonate (LiCH₃SO₃), lithium trifluoromethanesulfonate (LiCF₃SO₃), lithium bis(trifluoromethanesulfonyl)imide (LiN(SO₂CF₃)₂), LiC(SO₂CF₃)₃, lithium hexafluorosilicate (LiSiF₆), lithium bis(oxalato)borate (LiBOB), or lithium difluoroborate (LiF₂OB). For example, the lithium salt may be LiPF₆ characterized by a high ionic conductivity and capability of improving cycle properties.

The nonaqueous solvent is not particularly limited herein. For example, the nonaqueous solvent may be at least one of a carbonate compound, a carboxylate compound, an ether compound, or another organic solvent. The carbonate compound may be at least one of a chain carbonate compound, a cyclic carbonate compound, or a fluorocarbonate compound. Examples of the chain carbonate compound are at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). Examples of the cyclic carbonate compound are at least one of ethylene carbonate (EC), propylene carbonate (PC), butylene carbonate (BC), or vinyl ethylene carbonate (VEC). Examples of the fluorocarbonate compound are at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. Examples of the carboxylate compound are at least one of methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, or caprolactone. Examples of the ether compound are at least one of dibutyl ether, tetraglyme, diglyme, 1,2-dimethoxyethane, 1,2-diethoxyethane, ethoxy-methoxyethane, 2-methyltetrahydrofuran, or tetrahydrofuran. Examples of the other organic solvent are at least one of propyl propionate, dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or a phosphate ester. Based on the mass of the electrolyte solution, the total mass percent of the nonaqueous solvents is 5% to 90%, for example, 5%, 10%, 15%, 20%, 25%, 30%, 35%, 40%, 45%, 50%, 55%, 60%, 65%, 70%, 75%, 80%, 85%, 90%, or a value falling within a range formed by any two thereof.

The electrochemical device in this application further includes a separator. The separator is not particularly limited herein, as long as the objectives of this application can be achieved.

The electrochemical device in this application is not particularly limited, and may be any device in which an electrochemical reaction occurs. In some embodiments, the electrochemical device may include, but not limited to, a lithium metal secondary battery, a lithium-ion battery, a lithium polymer secondary battery, a lithium-ion polymer secondary battery, or the like.

The process of preparing the electrochemical device is well known to a person skilled in the art, and is not particularly limited in this application. For example, the preparation process may include, but without being limited to, the following steps: stacking the positive electrode plate, the separator, and the negative electrode plate in sequence, and winding the stacked structure as required to obtain a jelly-roll electrode assembly; putting the electrode assembly into a packaging shell, injecting the electrolyte solution into the packaging shell, and sealing the packaging shell to obtain an electrochemical device; or, stacking the positive electrode plate, the separator, and the negative electrode plate in sequence, and then fixing the four corners of the entire stacked structure by use of adhesive tape to obtain a stacked-type electrode assembly, putting the electrode assembly into a packaging shell, injecting the electrolyte solution into the packaging shell, and sealing the packaging shell to obtain an electrochemical device. In addition, an overcurrent prevention element, a guide plate, and the like may be placed into the packaging shell as required, so as to prevent the rise of internal pressure, overcharge, and overdischarge of the electrochemical device.

A second aspect of this application provides an electronic device. The electronic device includes the electrochemical device according to any one of the above embodiments. By this means, the production cost of the electronic device is also reduced.

The electronic devices of this application are not particularly limited, and may include, but are not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, and the like.

### Embodiments

The implementations of this application are described below in more detail with reference to embodiments and comparative embodiments. Various tests and evaluations are performed by the following methods.

### Test methods and devices

### Material costing logic

The material cost of a single lithium-ion battery is the sum of the material costs of all components. The component materials are four main materials and auxiliary materials. The four main materials are positive active material, negative active material, separator, and electrolyte solution. The auxiliary materials are negative current collector, positive current collector, conductive agent, binder, solvent, adhesive tape, tab webs, packaging shell, and the like. Material cost of each component = unit price × amount of material used per unit.

Material cost percentage (%) = material cost of a lithium-ion battery in each embodiment/material cost of the lithium-ion battery in Comparative Embodiment 1 × 100%.

### Testing the first-cycle discharge capacity

Charging a lithium-ion battery to a full capacity at a temperature of 25 °C, and then discharging the battery at a constant current of 0.2C until the voltage reaches 3.0 V, and recording the first-cycle discharge capacity.

### Testing the capacity retention rate

Testing the cycle capacity retention rate of a lithium-ion battery: Charging the battery at 25 °C at a constant current of 0.2C until the voltage reaches a rated voltage, and then charging the battery at a constant voltage until the current drops to 0.025C, leaving the battery to stand for 5 minutes, and then discharging the battery at a current of 0.2C until the voltage reaches 3.0 V. Subjecting the battery to charge-discharge cycles in which the battery is charged at 0.2C and discharged at 0.2C by using the capacity obtained in this step as an initial capacity, and then comparing the capacity at the end of each cycle with the initial capacity to obtain a plurality of ratios between the cycle capacity and the initial capacity, and plotting a capacity fading curve by using the ratios. Obtaining a capacity retention rate from the capacity fading curve directly.

### Embodiment 1-1

### <Preparing a positive electrode plate>

Mixing lithium cobalt oxide (LiCoO₂) as a lithium-containing positive active material, conductive carbon as a conductive agent, and polyvinylidene difluoride (PVDF) as a positive electrode binder at a mass ratio of 95.8: 2.0: 2.2, and then adding N-methylpyrrolidone (NMP) as a solvent to form a positive electrode slurry in which the solid content is 75 wt%, and stirring well. Coating one surface of a 9 µm-thick aluminum foil with the positive electrode slurry evenly, and drying the slurry at 90 °C to obtain a positive electrode plate coated with a 100 µm-thick positive active material layer. Subsequently, repeating the above steps on the other surface of the positive electrode plate to obtain a positive electrode plate coated with the positive active material layer on both sides. Cold-pressing and cutting the positive electrode plate into sheets of 74 mm × 867 mm in size for future use.

### <Preparing a negative electrode plate>

Mixing aluminum oxide as an inorganic powder with polyacrylic acid as a first binder at a mass ratio of 90: 10 to obtain a ceramic coating slurry. Applying the ceramic coating slurry evenly onto one surface of a 6 µm-thick copper foil, and drying the foil at 110 °C obtain a negative electrode plate coated with a 3 µm-thick ceramic coating layer on a single side. Subsequently, repeating the above coating steps on the other surface of the negative electrode plate to obtain a negative electrode plate coated with the ceramic coating layer on both sides. Cold-pressing and cutting the negative electrode plate into sheets of 76 mm × 851 mm in size for future use. The coating weight of the ceramic coating layer is 18.5 mg/5000 mm².

### <Preparing an electrolyte solution>

Mixing EC, EMC, and DEC at a mass ratio of 30: 50: 20 in an dry argon atmosphere to obtain an organic solvent, adding a lithium salt LiPF₆ into the organic solvent to dissolve, stirring the mixture well to obtain a base solution, and then adding FEC and LiDFOB into the base solution. The molar concentration of LiPF₆ in the electrolyte solution is 1.15 mol/L. Based on the mass of the electrolyte solution, the mass percent W₁ of the FEC is 1%, and the mass percent W₂ of the LiDFOB is 0.6%.

### <Preparing a lithium-ion battery>

Using a 9 □m-thick polyethylene porous polymer film as a separator, stacking the above-prepared positive electrode plate, separator, and negative electrode plate sequentially, placing the separator between the positive electrode and the negative electrode to serve a function of separation, and winding the stacked structure to obtain an electrode assembly. Putting the electrode assembly into a packaging shell, injecting the prepared electrolyte solution, and performing packaging. Performing steps such as chemical formation, degassing, and edge trimming to obtain a lithium-ion battery. The process of the chemical formation is: The charging current of the chemical formation is 0.1C, the temperature of the chemical formation is 85 °C, and the static standing time in the chemical formation is 180 seconds.

### Embodiments 1-2 to 1-9

Identical to Embodiment 1-1 except that the relevant preparation parameters are adjusted according to Table 1, and the mass percentages of the base solution and the lithium salt in the electrolyte solution are changed accordingly based on the total mass 100% of the electrolyte solution.

### Embodiments 1-10 to 1-21

Identical to Embodiment 1-9 except that the relevant preparation parameters are adjusted according to Table 1.

### Embodiment 2-1

Identical to Embodiment 1-9 except that, in <Preparing a positive electrode plate>, Li₂O is added as a positive electrode supplement at a mass percent (W₃) of 3%, and the mass percent of the positive active material is decreased to 92.8%.

### Embodiments 2-2 to 2-7

Identical to Embodiment 2-1 except that the relevant preparation parameters are adjusted according to Table 2.

### Embodiment 3-1

Identical to Embodiment 1-9 except that, in <Preparing a positive electrode plate>, a positive electrode additive (Li₅FeO₄ as an inorganic lithium salt and graphene as a first conductive agent added at a mass ratio of 1: 5) is added at a mass percent (W₄) of 6%, and the mass percent of the positive active material is decreased to 89.8%.

### Embodiments 3-2 to 3-8

Identical to Embodiment 3-1 except that the relevant preparation parameters are adjusted according to Table 3.

### Embodiment 3-9

Identical to Embodiment 3-3 except that, in <Preparing a positive electrode plate>, both surfaces of the positive active material layer are coated with a ceramic coating layer, where the ceramic coating layer is the same as the ceramic coating layer obtained in <Preparing a negative electrode plate> in Embodiment 1-1.

### Embodiment 4-1

### <Preparing a negative electrode plate>

Mixing aluminum oxide as an inorganic powder with polyacrylic acid as a first binder at a mass ratio of 90: 10 to obtain a ceramic coating slurry.

Mixing amorphous carbon as a second conductive agent and styrene-butadiene rubber as a second binder at a mass ratio of 65: 35 to obtain a conductive layer slurry.

Applying the conductive layer slurry and the ceramic coating slurry evenly onto one surface of a 6 µm-thick copper foil in sequence, and drying the slurry at 110 °C obtain a negative electrode plate coated with a 1.5 µm-thick conductive layer and 2 µm-thick ceramic coating layer on a single side. Subsequently, repeating the above coating steps on the other surface of the negative electrode plate to obtain a negative electrode plate coated with the conductive layer and ceramic coating layer on both sides. Cold-pressing and cutting the negative electrode plate into sheets of 76 mm × 851 mm in size for future use. The coating weight of the conductive layer is 0.5 mg/5000 mm², and the coating weight of the ceramic coating layer is 13.6 mg/5000 mm².

The rest is the same as that in Embodiment 1-9.

### Embodiment 4-2

Identical to Embodiment 4-2 except that the process of <Preparing a positive electrode plate> is the same as that in Embodiment 3-9.

### Embodiments 4-3 to 4-4

Identical to Embodiment 4-2 except that the relevant preparation parameters are adjusted according to Table 4.

### Comparative Embodiment 1

### <Preparing a negative electrode plate>

Mixing graphite as a negative active material, conductive carbon black as a conductive agent, and styrene-butadiene rubber (SBR) as a binder at a mass ratio of 85: 5: 10, and then adding deionized water as a solvent to form a negative electrode slurry in which the solid content is 70 wt%, and stirring well. Applying the negative electrode slurry evenly onto one surface of a 6 µm-thick copper foil, and drying the slurry at 110 °C to obtain a negative electrode plate coated with a 130 µm-thick negative active material layer on a single side. Repeating the above coating steps on the other surface of the negative electrode plate to obtain a negative electrode plate coated with the negative active material layer on both sides. Cold-pressing and cutting the negative electrode plate into sheets of 76 mm × 851 mm in size for future use.

### Neither FEC nor LiDFOB is added in <Preparing an electrolyte solutions

The rest is the same as that in Embodiment 1-1.

Table 1 to Table 4 show the preparation parameters and performance parameters of the embodiments and comparative embodiments.

**Table 1**

| | Ceramic coating layer | | | | | | W₁ (%) | W₂ (%) | Material cost percentage (%) | First-cycle discharge capacity (mAh) | Capacity retention rate (%) |
|---|---|---|---|---|---|---|---|---|---|---|---|
| | Type of inorganic powder | Type of first binder | W₅ (%) | W₆ (%) | Coating weight (mg/5000 mm²) | Thickness (µm) | | | | | |
| Embodiment 1-1 | Aluminum oxide | Polyacrylic acid | 90 | 10 | 18.5 | 3 | 1 | 0.6 | 70 | 208 | 40 |
| Embodiment 1-2 | Aluminum oxide | Polyacrylic acid | 90 | 10 | 18.5 | 3 | 0.1 | 0.6 | 70 | 208 | 40 |
| Embodiment 1-3 | Aluminum oxide | Polyacrylic acid | 90 | 10 | 18.5 | 3 | 6 | 0.6 | 70 | 209 | 42 |
| Embodiment 1-4 | Aluminum oxide | Polyacrylic acid | 90 | 10 | 18.5 | 3 | 10 | 0.6 | 70 | 209 | 45 |
| Embodiment 1-5 | Aluminum oxide | Polyacrylic acid | 90 | 10 | 18.5 | 3 | 1 | 0.05 | 70 | 208 | 40 |
| Embodiment 1-6 | Aluminum oxide | Polyacrylic acid | 90 | 10 | 18.5 | 3 | 1 | 3 | 70 | 209 | 43 |
| Embodiment 1-7 | Aluminum oxide | Polyacrylic acid | 90 | 10 | 18.5 | 3 | 1 | 4 | 70 | 209 | 44 |
| Embodiment 1-8 | Aluminum oxide | Polyacrylic acid | 90 | 10 | 18.5 | 3 | 1 | 5 | 70 | 209 | 44 |
| Embodiment 1-9 | Aluminum oxide | Polyacrylic acid | 90 | 10 | 18.5 | 3 | 8 | 4 | 70 | 210 | 48 |
| Embodiment 1-10 | Magnesium oxide | Polyacrylic acid | 90 | 10 | 18.5 | 3 | 8 | 4 | 70 | 210 | 48 |
| Embodiment 1-11 | Zirconium oxide | Polyacrylic acid | 90 | 10 | 18.5 | 3 | 8 | 4 | 70 | 210 | 48 |
| Embodiment 1-12 | Boehmite | Polyacrylic acid | 90 | 10 | 18.5 | 3 | 8 | 4 | 70 | 210 | 48 |
| Embodiment 1-13 | Aluminum oxide | Polyvinylidene difluoride | 90 | 10 | 18.5 | 3 | 8 | 4 | 70 | 210 | 48 |
| Embodiment 1-14 | Aluminum oxide | Polyimide | 90 | 10 | 18.5 | 3 | 8 | 4 | 70 | 210 | 48 |
| Embodiment 1-15 | Aluminum oxide | Polyacrylic acid | 85 | 15 | 18.5 | 3 | 8 | 4 | 70 | 210 | 48 |
| Embodiment 1-16 | Aluminum oxide | Polyacrylic acid | 95 | 5 | 18.5 | 3 | 8 | 4 | 70 | 210 | 48 |
| Embodiment 1-17 | Aluminum oxide | Polyacrylic acid | 90 | 10 | 5 | 3 | 8 | 4 | 70 | 210 | 48 |
| Embodiment 1-18 | Aluminum oxide | Polyacrylic acid | 90 | 10 | 10 | 3 | 8 | 4 | 70 | 210 | 48 |
| Embodiment 1-19 | Aluminum oxide | Polyacrylic acid | 90 | 10 | 18.5 | 1 | 8 | 4 | 70 | 210 | 48 |
| Embodiment 1-20 | Aluminum oxide | Polyacrylic acid | 90 | 10 | 18.5 | 2 | 8 | 4 | 70 | 210 | 48 |
| Embodiment 1-21 | Aluminum oxide | Polyacrylic acid | 90 | 10 | 18.5 | 3 | \ | \ | 70 | 207 | 38 |
| Comparative Embodiment 1 | \ | \ | \ | \ | \ | \ | \ | \ | 100 | 210 | 90 |

| | | | | | | | | | | | |
|---|---|---|---|---|---|---|---|---|---|---|---|
| Note: "\" in Table 1 indicates absence of the corresponding parameter. | | | | | | | | | | | |

As can be seen from Embodiments 1-1 to 1-9, Embodiment 1-21, and Comparative Embodiment 1, when the negative electrode plate of the lithium-ion battery contains no negative active material, by applying the ceramic coating layer falling within the parameter range specified herein onto the surface of the negative current collector, and by adding the FEC and the LiDFOB at a mass percent falling within the range specified herein into the electrolyte solution, this application reduces the material cost on the premise that the lithium-ion battery exhibits a good first-cycle discharge capacity and can meet the requirements of the products designed to be charged and discharged for just a small number of cycles.

The types of the inorganic powder and the first binder in the ceramic coating layer usually also affect the material cost, first-cycle discharge capacity, and capacity retention rate of the lithium-ion battery. As can be seen from Embodiments 1-9 to 1-14, when the type of the inorganic powder and the type of the first binder fall within the ranges specified herein, the material cost is reduced on the premise that the lithium-ion battery exhibits a good first-cycle discharge capacity and can meet the requirements of the products designed to be charged and discharged for just a small number of cycles.

The mass percentages of the inorganic powder and the first binder in the ceramic coating layer usually also affect the material cost, first-cycle discharge capacity, and capacity retention rate of the lithium-ion battery. As can be seen from Embodiments 1-9, 1-15, and 1-16, when the mass percent of the inorganic powder and the mass percent of the first binder fall within the ranges specified herein, the material cost is reduced on the premise that the lithium-ion battery exhibits a good first-cycle discharge capacity and can meet the requirements of the products designed to be charged and discharged for just a small number of cycles.

The coating weight of the ceramic coating layer usually also affects the material cost, first-cycle discharge capacity, and capacity retention rate of the lithium-ion battery. As can be seen from Embodiments 1-9, 1-17, and 1-18, when the mass percent of the inorganic powder and the mass percent of the first binder fall within the ranges specified herein, the material cost is reduced on the premise that the lithium-ion battery exhibits a good first-cycle discharge capacity and can meet the requirements of the products designed to be charged and discharged for just a small number of cycles.

The thickness of the ceramic coating layer usually also affects the material cost, first-cycle discharge capacity, and capacity retention rate of the lithium-ion battery. As can be seen from Embodiments 1-9, 1-19, and 1-20, when the thickness of the ceramic coating layer falls within the range specified herein, the material cost is reduced on the premise that the lithium-ion battery exhibits a good first-cycle discharge capacity and can meet the requirements of the products designed to be charged and discharged for just a small number of cycles.

**Table 2**

| | Type of positive electrode lithium supplement | W₃ (%) | Material cost percentage (%) | First-cycle discharge capacity (mAh) | Capacity retention rate (%) |
|---|---|---|---|---|---|
| Embodiment 1-9 | \ | \ | 70 | 210 | 48 |
| Embodiment 2-1 | Li₂O | 3 | 72 | 211 | 70 |
| Embodiment 2-2 | Li₂O + Li₅FeO₅ (mass ratio = 35: 65) | 3 | 72 | 211 | 72 |
| Embodiment 2-3 | Li₂O + Li₄MnO₅ (mass ratio = 40: 60) | 3 | 72 | 211 | 72 |
| Embodiment 2-4 | Li₂O + Li₆CoO₅ (mass ratio = 40: 60) | 3 | 72 | 211 | 72 |
| Embodiment 2-5 | Li₂O + Li₅Fe_{0.8}Al_{0.2}O₄ (mass ratio = 40: 60) | 3 | 72 | 211 | 72 |
| Embodiment 2-6 | Li₂O + Li₅FeO₅ (mass ratio = 35: 65) | 5 | 73 | 212 | 73 |
| Embodiment 2-7 | Li₂O + Li₅FeO₅ (mass ratio = 35: 65) | 10 | 75 | 214 | 75 |

| | | | | | |
|---|---|---|---|---|---|
| Note: "\" in Table 2 indicates absence of the corresponding parameter. | | | | | |

The type of the positive electrode supplement and the mass percent of the positive electrode supplement in the positive active material layer usually also affect the material cost, first-cycle discharge capacity, and capacity retention rate of the lithium-ion battery. As can be seen from Embodiment 1-9 and Embodiments 2-1 to 2-7, when the type and the mass percent of the positive electrode supplement fall within the ranges specified herein, the material cost is reduced on the premise that the lithium-ion battery exhibits a good first-cycle discharge capacity and can meet the requirements of the products designed to be charged and discharged for just a small number of cycles.

**Table 3**

| | Positive electrode additive | | | | Position of ceramic coating layer in positive electrode plate | Material cost percentage (%) | First-cycle discharge capacity (mAh) | Capacity retention rate (%) |
|---|---|---|---|---|---|---|---|---|
| | Type of inorganic lithium salt | Type of first conductive agent | Mass ratio between inorganic lithium salt and first conductive agent | W₄ (%) | | | | |
| Embodiment 1-9 | \ | \ | \ | \ | \ | 70 | 210 | 48 |
| Embodiment 3-1 | Li₅FeO₄ | Graphene | 1: 5 | 6 | \ | 72 | 219 | 78 |
| Embodiment 3-2 | Li₅Fe_{0.9}Al_{0.1}O₄ | Graphene | 1: 5 | 6 | \ | 72 | 220 | 80 |
| Embodiment 3-3 | Li₅FeO₄ | Acetylene black | 1: 5 | 6 | \ | 72 | 215 | 75 |
| Embodiment 3-4 | Li₅FeO₄ | Carbon nanotube | 1: 5 | 6 | \ | 72 | 218 | 77 |
| Embodiment 3-5 | Li₅Fe_{0.9}Al_{0.1}O₄ | Graphene | 1:5 | 4 | \ | 71 | 209 | 79 |
| Embodiment 3-6 | Li₅Fe_{0.9}Al_{0.1}O₄ | Graphene | 1:5 | 8 | \ | 73 | 221 | 82 |
| Embodiment 3-7 | Li₅Fe_{0.9}Al_{0.1}O₄ | Graphene | 1:3 | 6 | \ | 72 | 221 | 79 |
| Embodiment 3-8 | Li₅Fe_{0.9}Al_{0.1}O₄ | Graphene | 1: 7 | 6 | \ | 72 | 219 | 81 |
| Embodiment 3-9 | Li₅Fe_{0.9}Al_{0.1}O₄ | Graphene | 1: 5 | 6 | Surface of positive active material layer | 72 | 220 | 81 |

| | | | | | | | | |
|---|---|---|---|---|---|---|---|---|
| Note: "\" in Table 3 indicates absence of the corresponding parameter. | | | | | | | | |

The type of the positive electrode additive, the mass percent of the positive electrode additive in the positive active material layer, and the mass ratio between the inorganic lithium salt and the first conductive agent usually also affect the material cost, first-cycle discharge capacity, and capacity retention rate of the lithium-ion battery. As can be seen from Embodiment 1-9 and Embodiments 3-1 to 3-8, when the type of the positive electrode additive, the mass percent of the positive electrode additive in the positive active material layer, and the mass ratio between the inorganic lithium salt and the first conductive agent fall within the ranges specified herein, the material cost is reduced on the premise that the lithium-ion battery exhibits a good first-cycle discharge capacity and can meet the requirements of the products designed to be charged and discharged for just a small number of cycles.

The existence of the ceramic coating layer in the positive electrode plate usually also affects the material cost, first-cycle discharge capacity, and capacity retention rate of the lithium-ion battery. As can be seen from Embodiments 3-2 and 3-9, when the positive electrode plate contains the ceramic coating layer, the material cost is reduced on the premise that the lithium-ion battery exhibits a good first-cycle discharge capacity and can meet the requirements of the products designed to be charged and discharged for just a small number of cycles.

**Table 4**

| | Position of ceramic coating layer in positive electrode plate | Conductive layer | | | | Material cost percentage (%) | First-cycle discharge capacity (mAh) | Capacity retention rate (%) |
|---|---|---|---|---|---|---|---|---|
| | | Type of second conductive agent | Type of second binder | W₇ (%) | W₈ (%) | | | |
| Embodiment 3-2 | \ | \ | \ | \ | \ | 72 | 220 | 80 |
| Embodiment 3-9 | Surface of positive active material layer | \ | \ | \ | \ | 72 | 220 | 81 |
| Embodiment 4-1 | \ | Amorphous carbon | Styrene-butadiene rubber | 65 | 35 | 72 | 222 | 80 |
| Embodiment 4-2 | Surface of positive active material layer | Amorphous carbon | Styrene-butadiene rubber | 65 | 35 | 72 | 222 | 81 |
| Embodiment 4-3 | Surface of positive active material layer | Amorphous carbon | Styrene-butadiene rubber | 60 | 40 | 72 | 222 | 81 |
| Embodiment 4-4 | Surface of positive active material layer | Amorphous carbon | Styrene-butadiene rubber | 70 | 30 | 72 | 222 | 81 |

| | | | | | | | | |
|---|---|---|---|---|---|---|---|---|
| Note: "\" in Table 4 indicates absence of the corresponding parameter. | | | | | | | | |

The existence of the conductive layer in the negative electrode plate usually also affects the material cost, first-cycle discharge capacity, and capacity retention rate of the lithium-ion battery. As can be seen from Embodiments 3-2 and 4-1 as well as Embodiments 3-9 and 4-2, when the negative electrode plate contains the conductive layer, the material cost is reduced on the premise that the lithium-ion battery exhibits a good first-cycle discharge capacity and can meet the requirements of the products designed to be charged and discharged for just a small number of cycles.

The mass percentages of the second conductive agent and the second binder in the conductive layer usually also affect the material cost, first-cycle discharge capacity, and capacity retention rate of the lithium-ion battery. As can be seen from Embodiments 4-2 to 4-4, when the mass percentages of the second conductive agent and the second binder in the conductive layer fall within the ranges specified herein, the material cost is reduced on the premise that the lithium-ion battery exhibits a good first-cycle discharge capacity and can meet the requirements of the products designed to be charged and discharged for just a small number of cycles.

What is described above is merely exemplary embodiments of this application, but is not intended to limit this application. Any modifications, equivalent replacements, improvements, and the like made without departing from the spirit and principles of this application still fall within the protection scope of this application.

## Claims

1. An electrochemical device, comprising a positive electrode plate and a negative electrode plate; wherein
the positive electrode plate comprises a positive current collector and a positive active material layer disposed on at least one surface of the positive current collector, and the positive active material layer comprises a lithium-containing positive active material; and
the negative electrode plate comprises a negative current collector and a ceramic coating layer disposed on both surfaces of the negative current collector, the negative electrode plate further comprises a lithium metal layer formed by depositing lithium ions from the lithium-containing positive active material onto a surface of the negative current collector during charging, the lithium metal layer is located between the negative current collector and the ceramic coating layer, and the negative electrode plate contains no negative active material.

2. The electrochemical device according to claim 1, further comprising an electrolyte solution, wherein the electrolyte solution comprises fluoroethylene carbonate and lithium difluoro(oxalato)borate; and
based on a mass of the electrolyte solution, a mass percent W₁ of the fluoroethylene carbonate is 0.1% to 10%, and a mass percent W₂ of the lithium difluoro(oxalato)borate is 0.05% to 5%.

3. The electrochemical device according to claim 1, wherein the lithium-containing positive active material comprises at least one of lithium cobalt oxide, lithium manganese oxide, lithium nickel cobalt manganese oxide, lithium titanium oxide, or lithium fluoride.

4. The electrochemical device according to claim 1, wherein the positive active material layer further comprises a positive electrode supplement;
the positive lithium supplement comprises at least one of Li₂O or LiₓMO_{y}, wherein 2 ≤ x ≤ 6, 2 ≤ y ≤ 5, and M comprises at least one of Al, Ni, Co, Mg, Mn, Cu, Fe, or Ti; and
based on a mass of the positive active material layer, a mass percent W₃ of the positive electrode supplement is 3% to 10%.

5. The electrochemical device according to claim 1, wherein the positive active material layer further comprises a positive electrode additive, the positive electrode additive comprises a composite material formed of an inorganic lithium salt and a first conductive agent, and a mass ratio between the inorganic lithium salt and the first conductive agent is 1: 3 to 1: 7; and
based on a mass of the positive active material layer, a mass percent W₄ of the positive electrode additive is 4% to 8%.

6. The electrochemical device according to claim 5, wherein the inorganic lithium salt comprises LiₛQₐN_{b}Oₜ, wherein 2 ≤ s ≤ 8, 0 ≤ a ≤ 1, 0 ≤ b ≤ 1, a + b ≥ 1, 2 ≤ t ≤ 6, Q is any one selected from Fe, Co, Mn, Ni, Zr, V, Nb, or Mo, and N is any one selected from Al, Mg, Ti, Cr, Y, Sr, Si, W, Ga, or Zn;
the first conductive agent comprises at least one of graphene, acetylene black, single-walled carbon nanotubes, or multi-walled carbon nanotubes.

7. The electrochemical device according to claim 1, wherein the positive electrode plate further comprises a ceramic coating layer, and the ceramic coating layer is disposed on a surface of the positive active material layer.

8. The electrochemical device according to claim 1, wherein the ceramic coating layer comprises an inorganic powder and a first binder; and
based on a mass of the ceramic coating layer, a mass percent W₅ of the inorganic powder is 85% to 95%, and a mass percent W₆ of the first binder is 5% to 15%.

9. The electrochemical device according to claim 8, wherein the inorganic powder comprises at least one of aluminum oxide, magnesium oxide, zirconium oxide, or boehmite, and the first binder comprises at least one of polyacrylic acid, polyvinylidene fluoride, polyimide, or polyvinyl alcohol.

10. The electrochemical device according to claim 1, wherein a coating weight of the ceramic coating layer is 5 mg/5000 mm² to 20 mg/5000 mm².

11. The electrochemical device according to claim 1, wherein a thickness of the ceramic coating layer is 1 µm to 3 µm.

12. The electrochemical device according to claim 1, wherein the negative electrode plate further comprises a conductive layer, the conductive layer is disposed between the negative current collector and the ceramic coating layer, and the lithium metal layer is disposed between the negative current collector and the conductive layer.

13. The electrochemical device according to claim 12, wherein the conductive layer comprises a second conductive agent and a second binder; and
based on a mass of the conductive layer, a mass percent W₇ of the second conductive agent is 60% to 70%, and a mass percent Ws of the second binder is 30% to 40%.

14. The electrochemical device according to claim 13, wherein the second conductive agent comprises at least one of amorphous carbon, single-walled carbon nanotubes, or multi-walled carbon nanotubes; and
the second binder comprises at least one of styrene-butadiene rubber, carboxymethyl cellulose, or polyvinyl alcohol.

15. An electronic device, comprising the electrochemical device according to any one of claims 1 to 14.
